# EUROPEAN PATENT APPLICATION

(11) **EP 1 486 256 A1**
(43) Date of publication of application: **15.12.2004**
(21) Application number: 04076747.7
(22) Date of filing: 10.06.2004
(51) Int. Cl.: B03C 1/247, B07B 1/15

(54) **Waste separation installation with star screen and eddy current separator.**

(30) Priority: 12.06.2003 NL 1023651
(71) Applicant: Reukema Non Ferro Scheiding B.V., 3846 BV Harderwijk (NL)
(72) Inventor: Hooiveld, Jan, 8241 AA Lelystad (NL); van Wiggen, Antonius Bernardus, 6605 XP Wijchen (NL)
(74) Representative: Riemens, Roelof Harm

(57) **Abstract**

Waste separation installation, comprising a feeder (3) for supplying waste, and an eddy current separator (8) for separating the waste into a fraction of nonferrous metal pieces and a residual fraction.

The installation also comprises screening means for screening out fine pieces of waste, in particular pieces of waste smaller than approximately 8-12 millimetres, and passing through remaining pieces of waste, the screening means comprising a star screen (4) having a plurality of drivable rods (5) which are positioned one behind the other and have a plurality of star-shaped discs (6) provided next to one another on each of the rods (5).

At least the star screen, the eddy current separator, the feeder (3) and a collector provided beneath the star screen (4) are positioned on a movable bearing surface.

## Description

The invention relates to a waste separation installation according to the preamble of claim 1 which is intended to separate nonferrous metal pieces, such as aluminium, copper, brass, tin, zinc, alloys and precious metals, out of a waste stream.

A waste separation installation of this type is known in practice and comprises an eddy current separator which can be fed with waste by a vibratory feeder. The vibratory feeder and eddy current separator in this case together form a stand-alone unit. During operation, pieces of waste, which have been spread out by the vibratory feeder, are moved onto a rapidly rotating feed belt of the eddy current separator. The separation principle is based on the fact that as a result of changes in magnetic flux an electric charge is generated in nonferrous metal pieces which are present in the waste. The Lorentz forces which result ensure that the nonferrous metal pieces are removed from the waste stream when they move over an end drum of the feeder belt.

A drawback of this installation is that it is relatively inflexible in use and that large preprocessing units are required for the waste stream in order to enable the eddy current separator to function appropriately. For example, it is necessary to have a screen unit which screens out small pieces of waste of a size of less than 10 millimetres and also a unit which removes the ferrous metals from the waste. A further drawback is that the feed belt of the eddy current separator has to be sufficiently long to enable the pieces of waste which come from the vibratory feeder to come to rest before they reach the changing magnetic field. To achieve good separation, the stream of waste supplied has to have a size distribution which amounts to no more than a factor of three or four times the undersize. To achieve this, it is often necessary to use an additional screen unit in the upstream section. In addition, in practice it has been found that the standard screening techniques used in preprocessing units to screen out the fine and coarse pieces of waste lead to problems with the pieces of waste sticking to the feed belt of the eddy current separator. This is probably to do with the fact that moisture which is enclosed in the pieces of waste is shaken to the surface in the screening units. This effect is highly disruptive to successful operation of the eddy current separator.

It is an object of the present invention to at least partially overcome the above drawbacks and/or to create a usable alternative. In particular, it is an object of_the invention to provide a compact and reliable waste separation installation with which a high degree of nonferrous metal pieces can be separated out of the stream of waste.

This object is achieved by a waste separation installation in accordance with claim 1. The installation in this case comprises a feeder which opens out into a star screen which in turn adjoins an eddy current separator. The star screen comprises a plurality of drivable rods which are positioned in succession and each have a plurality of star-shaped discs provided next to one another thereon. The distances between the rods and the star-shaped discs are such that the fine pieces of waste, in particular of a size of less than approximately 8-12 millimetres, can drop through between them. It has thus been found that the eddy current separator operates very effectively in combination with the star screen. Although the stream of waste preferably still has the ferrous metals removed from it in advance, it is now possible to process pieces of waste of a side of up to 12 to 15 times the undersize without this detracting from the efficiency of the separator. This leads to considerable cost savings. The star screen not only directly screens the small pieces of waste out of the stream of waste but also pulls the remaining pieces of waste apart, conveys them in a suitably spread-out manner towards the separator without moving the pieces of waste too much or too roughly. Consequently, sticking problems at the location of the separator caused by moisture coming to the surfaces no longer occur or scarcely occur. The installation according to the invention is eminently suitable for waste which is difficult to screen (moist waste), can be of a limited size and yet still be able to carry out screening quickly and efficiently in one pass and can separate out the nonferrous metal pieces. High capacities can be achieved with the installation. By way of example, capacities of from 100 to 150 tonnes per hour can be achieved for the processing of waste incineration slags.

The star screen in particular directly adjoins the eddy current separator. Connecting, for example, a vibrator feeder between them could only be counterproductive.

The compact assembly of star screen, eddy current separator, feeder and a collector extending beneath the star screen is placed on a movable bearing surface, in particular a bearing surface provided with wheels. Thus the assembly advantageously is made mobile in an excellent way and is per se a nonferrous separation installation which can be used very efficiently and flexibly and can operate at different locations. By way of example, the entire arrangement fits onto a standard three-axle semitrailer, including control panel and switch box. The dimensions of the entire semitrailer are then, for example, approx. 13 metres long, approx. 2.60 metres wide and at most 4 metres high. This makes transportation to working locations fast and simple.

Thus, the part of the installation placed on the baring service is directly transportable in its entirety and can function operational within a few hours after installation of possible feed and discharge conveyors and connection to a power supply.

The movable bearing surface preferably is formed by a (semi-) trailer, that is to say a trailer movable along the public way without special limitations. For this purpose the trailer in its entirety, that is to say including the parts placed thereon like the star screen and the eddy current separator, meets the standard measurements and further demands as prescribed in the traffic regulations law.

More particularly, a stabilization flap which hangs down is provided at the end of the star screen. This is used to slightly decelerate the pieces of waste coming from the star screen and thereby to stabilize them further before they reach the eddy current separator.

In a preferred embodiment, the eddy current separator comprises a rapidly rotating magnetic rotor which is arranged eccentrically therein and is positioned inside a nonmetallic drum. In this case, during operation the drum is driven much more slowly than the rotor, in order in this way to generate flux changes at the surface of the drum. The drum also functions as an end drive for a conveyor belt along which the waste which is to be separated is guided. If nonferrous metal pieces are passed over the drum by the conveyor belt, eddy currents are formed in these pieces as a result of the magnetic field which is generated there. These eddy currents induce second magnetic fields around the nonferrous metal pieces. These fields react with the magnetic field of the rotor, resulting in a combined attraction and repulsion which cause the nonferrous metal pieces to shoot forwards out of the stream of waste. The eccentric position of the magnetic rotor has proven very effective in this context for separating out the nonferrous metal pieces.

In a further variant, the magnetic rotor is arranged adjustably inside the drum. This enables the installation to be adapted according to the shape, size, conductivity, density, moisture content and structure of the nonferrous metal pieces which are to be separated off.

In a further variant, a neodymium top roll magnet is provided at the end of the eddy current separator. This means that it is advantageously also possible to separate off slightly ferritic stainless steel.

Further preferred embodiments are defined in the subclaims.

The invention also relates to the use of a waste separation installation according to claim 12.

The invention will be explained in more detail with reference to the appended drawing, in which:
Fig. 1 shows a longitudinal-sectional view through an embodiment of a mobile waste separation installation according to the invention;
Fig. 2 shows a diagrammatic plan view of the star screen in Fig. 1 without star-shaped discs;
Fig. 3 shows a plan view in more detail of a rod with star-shaped discs from the star screen shown in Figs. 1 and 2;
Fig. 4 shows a side view of a star-shaped disc from Fig. 3;
Fig. 5 shows a diagrammatic plan view of the device shown in Fig. 1 in operation on site;
Fig. 6 shows a variant of Fig. 5 with a neodymium top roll magnet;
Fig. 7 shows a variant of Fig. 6 with a second eddy current separator in a cascade arrangement; and
Fig. 8 shows a variant of Fig. 1 with additional filling hopper.

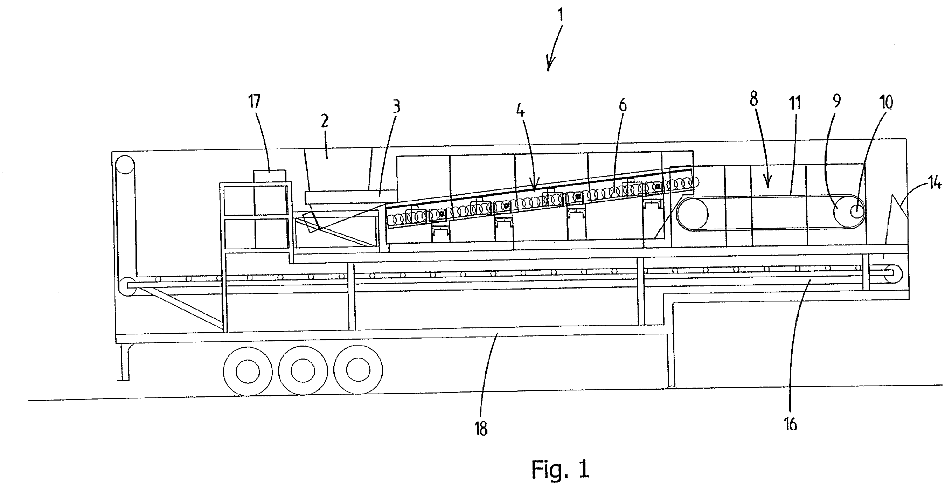

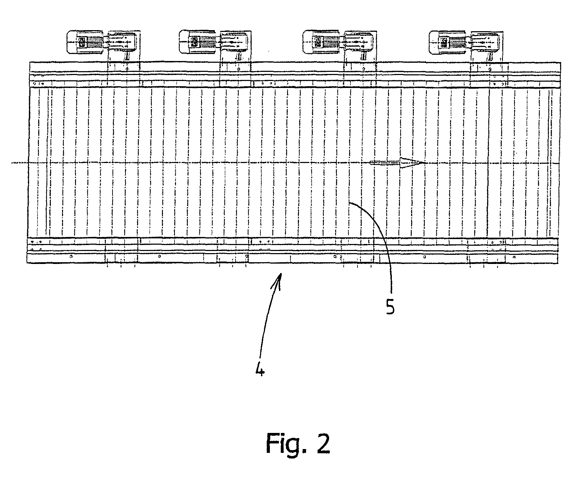

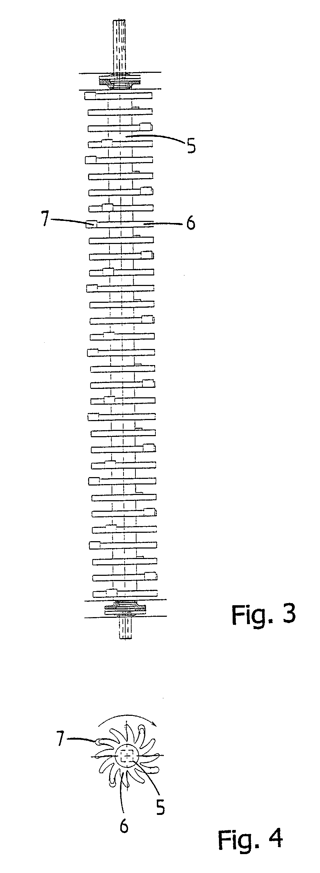

In Fig. 1, the waste separation installation is denoted overall by reference numeral 1. The installation 1 comprises a filling hopper 2 which opens out above a vibratory feeder 3 which in turn is connected to a star screen 4. The star screen 4 comprises a plurality of drivable rods 5 with star-shaped discs 6 (cf. Figs. 2, 3 and 4). The rods 5 and the star-shaped discs 6 are positioned in such a manner with respect to one another that screening can take place to approximately 8-10 millimetres. Furthermore, the star-shaped discs 6 are provided at a number of free ends with thickened portions 7 which effect a self-cleaning effect. The star screen 4 is positioned such that it slopes upwards at an oblique angle of approximately 6-8 degrees and at the end opens out above an eddy current separator 8. The eddy current separator 8 comprises a drivable plastic drum 9, a drivable magnetic rotor 10 positioned eccentrically and adjustably therein, and a polyethylene conveyor belt 11 driven by the drum 9. A separation plate 14 is arranged downstream of the drum 9.

A conveyor 16 runs continuously beneath the star screen 4 and the eddy current separator 8 and collects the small pieces of waste which have been screened out by the star screen 4 together with the pieces of waste which drop directly downwards from the eddy current separator and discharges them in the opposite direction to the left. The end of the conveyor 16 is designed such that it can be folded up, Fig. 1 showing the folded position.

The abovementioned components of the installation together with switchboxes and control panels 17 are all accommodated on a displaceable semitrailer 18.

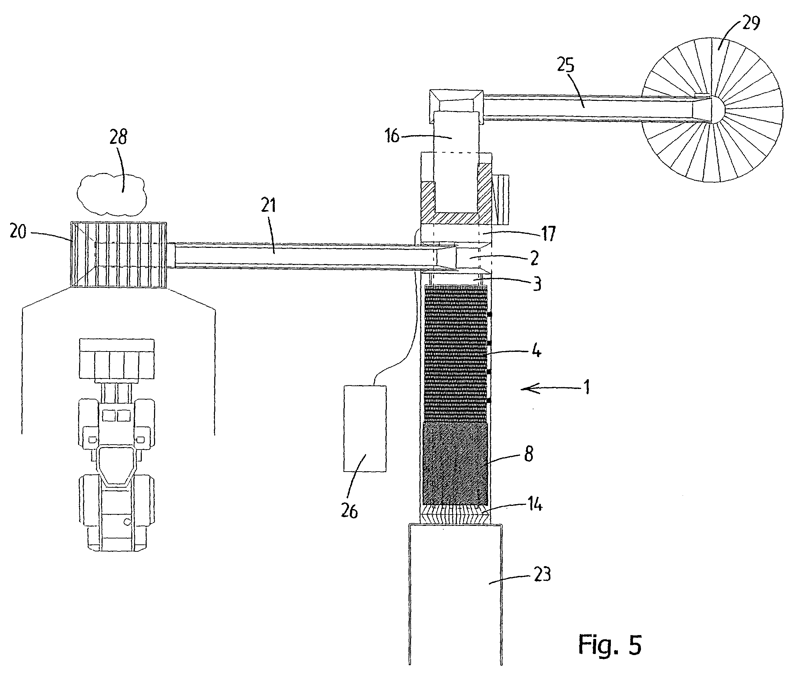

One possible use of the installation 1 will now be explained with reference to Fig. 5. In this case, the installation has been positioned at a working site where an introduction funnel 20 and a feed conveyor 21 are located, connected to the filling hopper 2 of the installation 1. Furthermore, there is a collection receptacle 23 which at the front end of the semitrailer 18 adjoins the eddy current separator 8, and a discharge conveyor 25 which adjoins the conveyor 16 of the installation 1. A generator set 26 is provided to drive the installation.

During operation, in each case a quantity of waste which is to be separated is loaded into the introduction funnel 20 with the aid of a loading vehicle. The introduction funnel 20 may in this case be provided at the top with a screen grate for blocking coarse pieces of waste, for example pieces of waste with a size of larger than 120-150 millimetres. These then drop off towards the rear of the introduction funnel, where they collect on a heap 28. Via the feed conveyor 21, the waste reaches the filling hopper 2 in order to be vibrated from there via the vibratory feeder 3 onto the star screen 4. The star screen 4 then screens out the fine pieces of waste with a size of less than 8-10 millimetres, which drop onto the conveyor 16, pulling the remaining pieces of waste apart and conveying them towards the eddy current separator 8, where these pieces of waste are metered, suitably distributed and pass onto the conveyor belt 11 separately from one another. The nonferrous metal pieces located between the pieces of waste are shot forwards to beyond the separation plate 14 and fall into the collection receptacle 23 as soon they reach the position above the drum 9, under the influence of the eddy currents which are formed there and magnetic forces which prevail. The remaining pieces of waste drop downwards onto the conveyor 16 in front of the separation plate 14. The fine pieces of waste which have been screened out and drop onto the conveyor 16 are automatically mixed with the "sterile" coarser pieces of waste from which nonferrous metal pieces have been removed and are then discharged to the conveyor 25 in order to be tipped onto a heap 29.

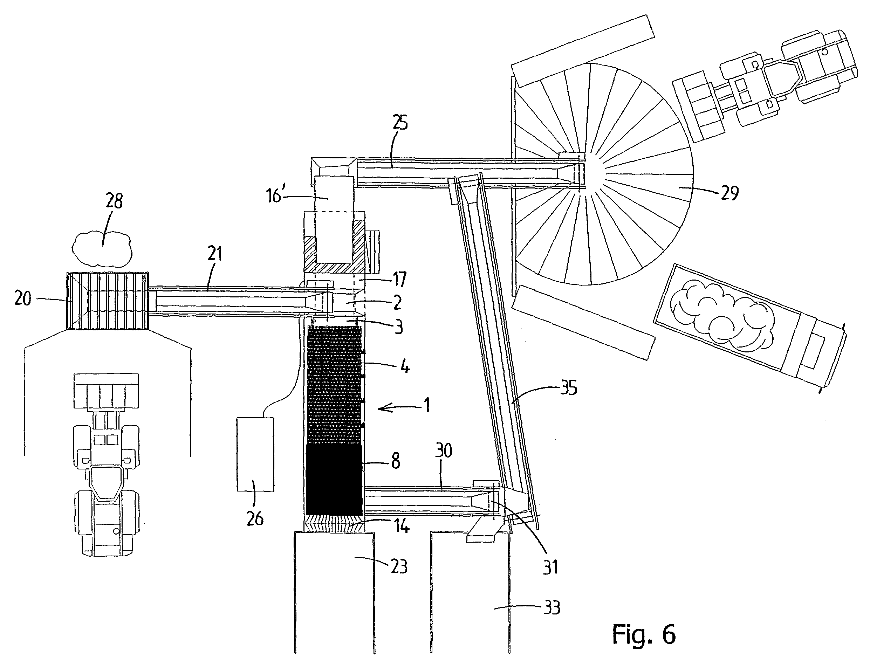

Fig. 6 shows a variant of Fig. 5, in which identical components are denoted by identical reference numerals. Unlike in Fig. 1 to 5, however, the pieces of waste from which nonferrous metal pieces have been removed now drop onto a conveyor 30 which extends towards the side and above which a neodymium top roll magnet 31 is arranged. This draws the slightly ferritic stainless steel pieces which are still present between the pieces of waste out of the stream of waste and deposits them in a collection receptacle 33. The remaining pieces of waste drop onto a conveyor 35 which adjoins the discharge conveyor 25 where they are mixed with the pieces of waste which have been screened out by the star screen 4. In this variant, the conveyor 16' no longer extends as far as the end of the eddy current separator 8, but rather only begins beneath the star screen 4.

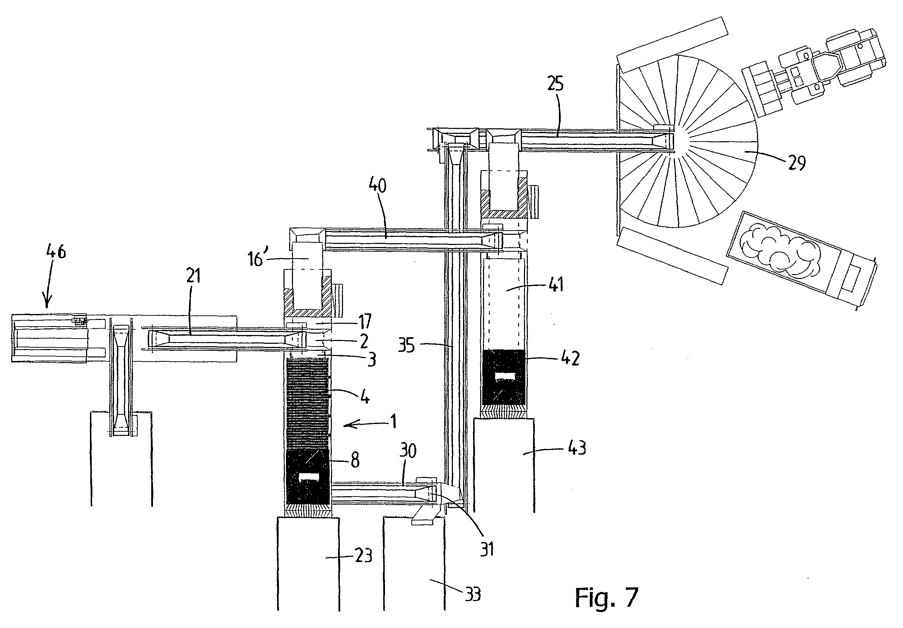

Fig. 7 shows a variant of Fig. 6 in which identical components are likewise denoted by identical reference numerals. In this variant, the conveyor 16' opens out onto a conveyor 40 which feeds the fine pieces of waste which have been screened out to a second assembly of screen means 41 and eddy current separator 42. In this case, the screen means 41 are preferably formed by a rod screen with a plurality of vibrating rods above one another and are used to screen out the very fine pieces of waste, in particular of a size of less than 5-6 millimetres. The remaining fine pieces of waste, in particular in the range from 5/6-10/12 millimetres, are then passed over the eddy current separator 42 in order for the small nonferrous metal pieces to be separated out. The small nonferrous metal pieces are in this case thrown into a collection receptacle 43. The stream of waste from which these small nonferrous metal pieces have been removed is then returned, together with the very fine pieces of waste which have been screened out, to and admixed onto the discharge conveyor 25. This cascade arrangement with fractionated eddy current separation has the advantage of a maximum degree of removal/recovery of nonferrous metal pieces from waste streams. This variant is particularly suitable for use for separation of nonferrous metal pieces out of waste incineration slags, an application in which high demands are imposed on this separation in connection with reuse of these slags in civil engineering applications. For the second cascade stage, a neodymium top roll magnet is less appropriate, since there is scarcely any stainless steel left in the entire fine fraction. Fig. 7 also shows a magnet station 46 for removing ferrous metal pieces out of the stream of waste before it is fed to the installations comprising the eddy current separators. The assembly comprising screen means 41 and eddy current separator 42 is positioned on a semitrailer.

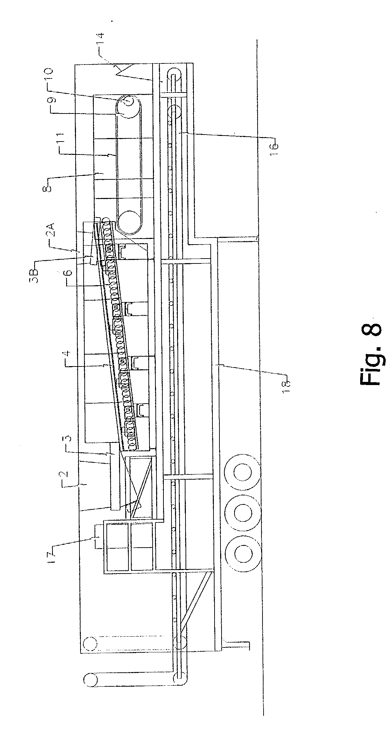

Fig. 8 shows a variant of Fig. 1, in which the same parts are indicated with the same reference numerals. The installation 1 now comprises a second filling hopper 2A, which opens out above a feeder 3B. The feeder 3B advantageously is detachable and only is placed when the filling hopper 2A is used. The filling hopper 2A and the feeder 3B are provided above the end part of the star-screen 4, in which the feeder 3B opens out above de eddy current separator 8. Thus, it is possible to switch off the star-screen 4 and feed the eddy current separator 8 directly with pieces of waste, in particular fine pieces of waste, which otherwise would have fallen through the star-screen 4. Thus, for example, the fraction of waste collected by the conveyor 16 can be treated again.

The conveyor 16 here is displaceable in the longitudinal direction, in which Fig. 8 shows two positions. In the position most to the left in Fig. 8, in this way only the fraction separated by means of the star-screen 4 falls at the conveyor 16. The waste parts falling directly downwards from the eddy current separator 8, then can be collected separately and, for example, be discharged by means of another additional belt. It is now possible to feed the fraction falling onto the conveyor 16, if desired after intermediate storage, to the second filling hopper 2A, if desired forming part of a separate movable installation 1 placed in cascade, and to also therefrom separate the nonferrous metal pieces.

In addition to the embodiments shown, numerous variants are possible. For example, it is possible to use other types of conveyors and/or feeders. It is also possible to use other types and dimensions of star-shaped discs for the star screen. In addition, the installation may also be attached to a movable bearing surface. As an alternative to the rod screen, it is also possible to use other screen means for the further screening out of the fine pieces of waste, for example a so-called Spanwelle screen. Furthermore, it is possible to use a type of eddy current separator with which it is possible to separate out nonferrous metal according to type. This is then used in combination with a plurality of separation plates positioned at a distance from one another. By waste also residues are to be understood, for example coming from a shredder. In conformance with Fig. 7 another variant is possible with a semi-mobile screening station (Liwell screen) connected in series with an eddy current separator connected in series which treats the fine fraction. For example at first screening takes place at 4/6 millimetres and subsequently an eddy current separator treatment follows at the 4/6 - 10 millimetre fraction. Thus an optimisation of the nonferro reclamation is possible.

Thus, the invention provides an excellently functioning waste separation installation which can be made mobile and makes it possible to achieve high capacities, and which will be able to comply with even the increasingly stringent demands which will be imposed in the future. The installation is particularly suitable for the treatment of waste incineration slacks. Other applications are also possible.

## Claims

1. Waste separation installation, comprising:
- a feeder (3) for supplying waste; and
- an eddy current separator (8) for separating the waste into a fraction of nonferrous metal pieces and a residual fraction;
**characterized in that**
the installation also comprises:
- screening means for screening out fine pieces of waste, in particular pieces of waste smaller than approximately 8-12 millimetres, and passing through remaining pieces of waste; the screening means comprising a star screen (4) having a plurality of drivable rods (5) which are positioned one behind the other and have a plurality of star-shaped discs (6) provided next to one another on each of the rods (5), in which at least the star screen (4), the eddy current separator (8), the feeder (3) and a collector provided beneath the star screen (4) are positioned on a movable bearing surface, in particular a mobile bearing surface (18) provided with wheels.

2. Waste separation installation according to claim 1, in which the movable bearing surface is a (semi) trailer, which in its entirety fulfils the demands as prescribed in the traffic regulations law without limitations.

3. Waste separation installation according to one of the proceeding claims, in which the star screen (4) directly adjoins the eddy current separator (8).

4. Waste separation installation according to claim 3, in which a stabilizing flap which hangs down is provided at the end of the star screen (4) in order to stabilize the pieces of waste which are to be passed through.

5. Waste separation installation according to one of the preceding claims, in which the eddy current separator (8) comprises a drivable magnetic rotor (10) inside a drivable nonmetallic drum (9), over which drum (9) a conveyor belt (11) is passed, along which the pieces of waste which have been passed through from the star feeder (4) are guided, and in which the magnetic rotor (10)is arranged eccentrically inside the drum (9).

6. Waste separation installation according to one of the preceding claims, in which the eddy current separator (8) comprises a drivable magnetic rotor (10) inside a drivable nonmetallic drum (9), over which drum (9) a conveyor belt (11) is guided, along which the pieces of waste which have been passed through from the star feeder (4) are guided, and in which the magnetic rotor (10) is arranged adjustably inside the drum (9).

7. Waste separation installation according to one of the preceding claims, in which a neodymium top roll magnet (31) is provided at the end of the eddy current separator (8).

8. Waste separation installation according to one of the preceding claims, in which a collector is provided beneath the star screen (4) for collecting the fine pieces of waste which have been screened out, in particular a discharge belt (16) which also extends beneath the eddy current separator (8) for collecting the residual fraction and mixing it with the fine pieces of waste which have been screened out.

9. Waste separation installation according to claim 8, in which the collector (16) is displaceable in the longitudinal direction with respect to the eddy current separator (8) and the star screen (4).

10. Waste separation installation according to one of the preceding claims, also comprising:
- second screen means (41) for screening out very fine pieces of waste, in particular pieces of waste which are smaller than approximately 5-6 millimetres, and passing through the remaining fine pieces of waste; and
- a second eddy current separator (42) for separating the fine pieces of waste which have been passed through into a fraction of nonferrous metal waste pieces and a residual fraction; the second screen means (41) in particular comprising a plurality of vibrating rods positioned above one another.

11. Waste separation installation according to one of the preceding claims, in which the star screen (4) is positioned at an oblique angle, in particular an angle of 0-10 degrees.

12. Waste separation installation according to one of the preceding claims, in which the star-shaped discs (6) are made from rubber.

13. Waste separation installation according to one of the preceding claims, in which a second feeder (3B) is provided which opens out above the eddy current separator (8).

14. Use of a waste separation installation according to one of the preceding claims.
